# FASCICULE DE BREVET EUROPEEN

(11) **EP 1 681 647 B1**
(45) Date de publication et mention de la délivrance du brevet: **15.08.2018**
(21) Numéro de dépôt: 04291005.9
(22) Date de dépôt: 15.04.2004
(51) Int. Cl.: G06F 17/50, G06T 13/40

(54) **Optimisation de l'ergonomie lors du déplacement d'un mannequin virtuel**
Optimierung der Ergonomie bei Bewegung eines virtuellen Mannequins
Optimisation of ergonomics of movement of a virtual model

(30) Priorité: 28.04.2003 FR 0305193
(43) Date de publication de la demande: 19.07.2006
(73) Titulaire: Safran Aircraft Engines, 75015 Paris (FR)
(72) Inventeur: Maille, Bruno, 75015 Paris (FR); Ramstein, Edouard, 87100 Limoges (FR); Chedmail, Patrick, 44240 La Chapelle-sur-Erdre (FR)
(74) Mandataire: Delumeau, François Guy

(56) Documents cités:
- PATRICK CHEDMAIL ET AL: "Accessibility and egonomics study with virtual reality, a state of the art", MECANIQUE ET INDUSTRIES, ELSEVIER, PARIS, FR, vol. 3, no. 2, 1 janvier 2002 (2002-01-01) , pages 147-152, XP002267500, ISSN: 1296-2139, DOI: 10.1016/S1296-2139(02)01151-X
- LYNN MCATAMNEY ET AL: "RULA: a survey method for the investigation of work-related upper limb disorders", APPLIED ERGONOMICS, vol. 24, no. 2, 1 avril 1993 (1993-04-01), pages 91-99, XP055130449, ISSN: 0003-6870, DOI: 10.1016/0003-6870(93)90080-S
- BIDAULT F ET AL: "A distributed approach for access and visibility task under ergonomic constraints with a manikin in a virtual reality environment", ROBOT AND HUMAN INTERACTIVE COMMUNICATION, 2001. PROCEEDINGS. 10TH IEE E INTERNATIONAL WORKSHOP ON SEP 18-21, 2001, PISCATAWAY, NJ, USA,IEEE, 18 septembre 2001 (2001-09-18), pages 32-37, XP010576266, ISBN: 978-0-7803-7222-1

## Description

### Domaine de l'invention

La présente invention se rapporte au domaine de la simulation de déplacement d'un mannequin virtuel dans un environnement virtuel. L'invention concerne plus particulièrement le déplacement d'un mannequin virtuel utilisant un modèle multi-agent.

### Arrière-plan de l'invention

Dans de nombreuses industries, notamment dans le domaine aéronautique ou spatial, on fait couramment appel à des modélisations en réalité virtuelle. Par exemple, on utilise souvent une maquette numérique pour évaluer les interférences entre différentes pièces.

De même, la modélisation peut être utilisée pour simuler des actions humaines dans un environnement défini afin de visualiser, par exemple les déplacements qu'un technicien devra réaliser pour effectuer ces actions. Ceci est utile pour valider et optimiser l'accessibilité de certaines pièces d'un dispositif, comme celle d'un moteur d'avion, qui demandent des inspections et des maintenances régulières. Ainsi, la facilité d'accès des différents éléments d'un dispositif peut être contrôlée virtuellement dès la modélisation de ces derniers, grâce à une simulation au moyen d'un mannequin virtuel.

L'utilisation d'un mannequin virtuel pour ce type d'application existe déjà. Un exemple est donné par l'article de Chedmail, Damay et Le Roy, intitulée « Réalité virtuelle, maquette numérique du produit, outils de distribution et partage de la conception » (Journées Priméca, La Plagne 7-9 avril 1999).

Cet article propose une méthode pour valider l'accessibilité au montage/démontage d'un objet dans un environnement encombré en utilisant un modèle de déplacement d'un mannequin virtuel dans un environnement virtuel.

Un mannequin virtuel est un ensemble de données numériques définissant un système cinématique caractérisé par plusieurs membres articulés selon une pluralité de degrés de liberté.

Ainsi, à un instant donné, le mannequin peut être défini par sa position globale dans un espace métrique et par les valeurs des degrés de liberté de ces articulations. Ces données ainsi que des paramètres définissant l'environnement du mannequin peuvent être stockés dans un support de données numériques.

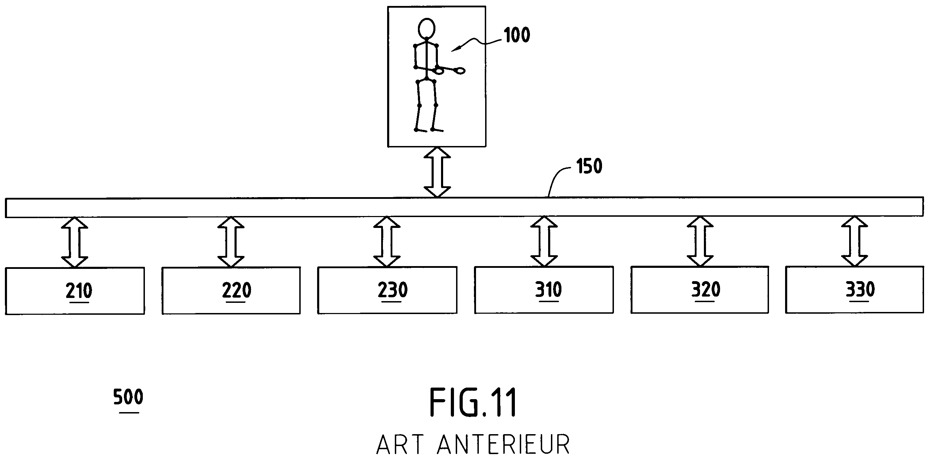

Le principe de la méthode proposée dans l'article de Chedmail *et al.* est basé sur l'utilisation d'un système qualifié de « multi-agent » illustré par la figure 11.

Le système multi-agent 500 comporte un ensemble d'éléments actifs appelés « agents » 210, 220, 230, 310, 320 et 330 qui agissent sur des objets passifs comme les membres et articulations d'un mannequin virtuel 100 en tenant compte de son environnement.

Dans ce système multi-agent 500, les données numériques définissant le mannequin 100 dans son environnement constitue une sorte de « tableau noir » ou « données partagées » 150 au travers duquel les différents agents 210, 220, 230, 310, 320 et 330 interagissent.

Ces agents sont régis par des règles de comportement simples mais grâce à l'interaction entre eux, un comportement collectif complexe, tel le déplacement d'un mannequin, peut être obtenu.

Ainsi, le processus de recherche de la trajectoire du mannequin virtuel 100 est distribué sur différents agents 210, 220, 230, 310, 320 et 330 capables d'agir sur ce mannequin 100 en fonction de l'environnement considéré. Chaque agent calcule une contribution sur la position globale du mannequin 100 ou sur les degrés de liberté de ses articulations.

La figure 11 montre un premier agent d'attraction 220 qui agit sur la position globale du mannequin 100 et un second agent d'attraction 320 qui agit sur la pluralité de degrés de liberté d'articulation du mannequin 100. Les agents d'attraction 220 et 320 ont pour but de faire déplacer le mannequin 100 vers une cible bien définie.

En outre, un premier agent de glissement 210 agit sur la position globale du mannequin 100 et un second agent de glissement 310 agit sur la pluralité de degrés de liberté d'articulation du mannequin 100. Les agents de glissement 220 et 320 agissent en fonction des paramètres de l'environnement pour éviter les collisions du mannequin 100 avec cet environnement.

De plus, un premier agent d'opérateur 230 agit sur la position globale du mannequin 100 et un second agent d'opérateur 330 agit sur la pluralité de degrés de liberté d'articulation du mannequin 100. Les agents d'opérateur 230 et 330 permettent à un opérateur d'agir sur la trajectoire du mannequin 100 en temps réel au cours de sa génération.

Lors du déplacement ou manipulation du mannequin, les limites articulaires sont normalement prises en compte. En revanche, n'importe quelle posture (dans les limites articulaires) peut être réalisée.

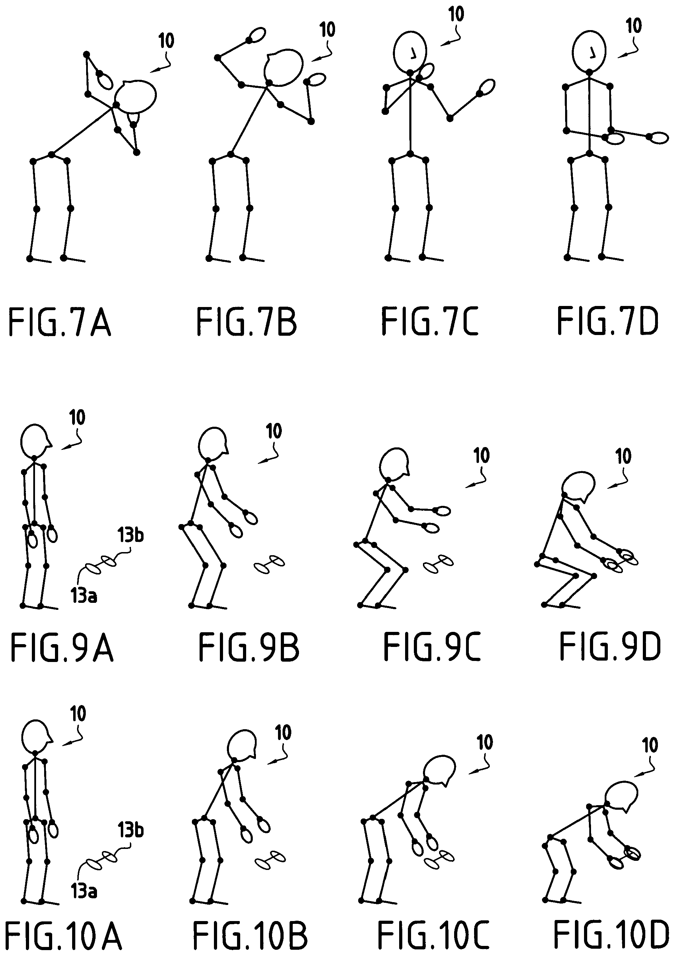

Ainsi, des postures qui peuvent être pénibles voir dangereuses pour le travail réel d'un humain peuvent être engendrées (voir figures 10A à 10D).

Il est toujours possible de corriger les mauvaises postures à posteriori, mais pour cela il faut procéder par tâtonnement, en évaluant à chaque fois la posture obtenue afin d'obtenir des postures confortables.

### Objet et résumé de l'invention

La présente invention vise à remédier aux inconvénients précités en proposant un procédé et un système qui permettent de simuler le déplacement ou la manipulation d'un mannequin tout en lui assurant des postures de confort optimal.

Ces buts sont atteints grâce à un procédé multi-agent de déplacement d'un mannequin virtuel dans un environnement avec les caractéristiques de la revendication 1, un système les caractéristiques de la revendication 15 et un programme d'ordinateur avec les caractéristiques de la revendication 22. Ainsi, le procédé selon l'invention permet d'optimiser la posture du mannequin de façon automatique, c'est-à-dire que la posture générée est convenable dès son obtention. Il n'est plus nécessaire de procéder par tâtonnements à posteriori pour obtenir une posture confortable. Cela permet une grande simplicité et un gain de temps important.

Avantageusement, le procédé peut comporter une contribution d'un agent d'attraction agissant sur la position globale du mannequin pour le déplacer de façon globale vers la cible.

Le procédé peut aussi comporter une contribution d'un agent de glissement agissant sur la pluralité de degrés de liberté d'articulation du mannequin en fonction des paramètres définissant l'environnement pour faciliter la recherche de solutions qui évitent les collisions du mannequin avec son environnement.

Le procédé peut comporter en outre une contribution d'au moins un agent d'opérateur agissant sur la position globale et/ou la pluralité de degrés de liberté d'articulation du mannequin permettant à un opérateur d'agir en temps réel sur le déplacement du mannequin.

Selon une caractéristique de l'invention, la contribution de l'agent d'ergonomie comporte les étapes suivantes :
- détermination d'un vecteur de scores posturaux suivant les degrés de liberté d'articulation du mannequin,
- normalisation dudit vecteur de scores posturaux afin de former un vecteur normé de scores posturaux,
- pondération dudit vecteur normé de scores posturaux afin de former un vecteur normé de scores posturaux pondérés,
- inversion du signe dudit vecteur normé de scores posturaux pondérés afin de déterminer la contribution de l'agent d'ergonomie.

L'étape de détermination du vecteur de scores posturaux est réalisée en transformant un critère postural du type RULA en un critère algébrique selon que chaque score postural est réalisé dans le sens positif ou négatif de l'articulation.

Avantageusement, pour chaque degré de liberté d'articulation du mannequin, un score de zéro est attribué à un intervalle ouvert défini autour de la position de changement de signe du score algébrique, ledit intervalle ayant un rayon égal à un pas de déplacement articulaire prédéfini selon le degré de liberté considéré.

L'étape de normalisation peut être réalisée en divisant toutes les composantes du vecteur de scores posturaux par la valeur absolue maximum de ces composantes.

L'étape de pondération peut être réalisée en multipliant chaque composante du vecteur normé de scores posturaux par le pas de déplacement articulaire prédéfini selon le type d'articulation.

Selon un aspect de l'invention, le pas de déplacement articulaire est constant pour toutes les articulations.

Avantageusement, le pas de déplacement articulaire est un angle compris entre 0,001 rad et 0,1 rad.

Selon encore une autre caractéristique de l'invention, les agents d'attraction, de glissement, d'ergonomie et d'opérateur interagissent de façon hiérarchisée au travers de données numériques partagées définissant le mannequin et son environnement.

Les agents d'attraction, de glissement, d'ergonomie et d'opérateur peuvent être hiérarchisés en attribuant à chacun d'eux un taux d'activité stationnaire tout au long du déplacement du mannequin.

Selon un aspect particulier de l'invention, le taux d'activité de l'agent de glissement est le plus faible et celui de l'agent d'ergonomie est le plus élevé.

Avantageusement, le taux d'activité de l'agent de glissement est un nombre entier compris entre 1 et 2, le taux d'activité de l'agent d'attraction est un nombre entier compris entre 2 et 4, le taux d'activité de l'agent d'ergonomie est un nombre entier compris entre 5 et 15, et le taux d'activité de l'agent d'opérateur est un nombre entier compris entre 2 et 4.

### Brève description des dessins

D'autres particularités et avantages du procédé et du système selon l'invention ressortiront mieux à la lecture de la description faite ci-après, à titre indicatif mais non limitatif, en référence aux dessins annexés sur lesquels :
- la figure 1 est une vue en perspective des moyens matériels mis en oeuvre dans le système ou procédé de l'invention ;
- la figure 2 illustre très schématiquement un mannequin défini dans un espace métrique selon l'invention ;
- la figure 3 illustre très schématiquement une architecture d'un système multi-agent utilisé pour le déplacement d'un mannequin selon l'invention ;
- les figures 4A à 4F illustrent des diagrammes schématiques indiquant des scores posturaux de type RULA pour le bras selon l'invention ;
- les figures 5A à 5D illustrent des diagrammes schématiques indiquant des scores posturaux de type RULA pour l'avant-bras selon l'invention ;
- les figures 6A à 6E illustrent des diagrammes schématiques indiquant des scores posturaux de type RULA pour le poignet selon l'invention ;
- les figures 7A à 7D illustrent très schématiquement une séquence de correction de la posture d'un mannequin sous l'action unique d'un agent d'ergonomie selon l'invention ;
- la figure 8 est un organigramme illustrant les étapes principales d'un procédé multi-agent selon l'invention.
- les figures 9A à 9D illustrent très schématiquement une séquence de déplacement d'un mannequin sous l'action d'un système multi-agent avec un agent d'ergonomie selon l'invention ;
- les figures 10A à 10D illustrent très schématiquement une séquence de déplacement d'un mannequin sous l'action d'un système multi-agent sans agent d'ergonomie selon l'art antérieur; et
- la figure 11 illustre très schématiquement une architecture d'un système multi-agent utilisé pour le déplacement d'un mannequin selon l'art antérieur.

### Description détaillée de modes préférentiels de réalisation

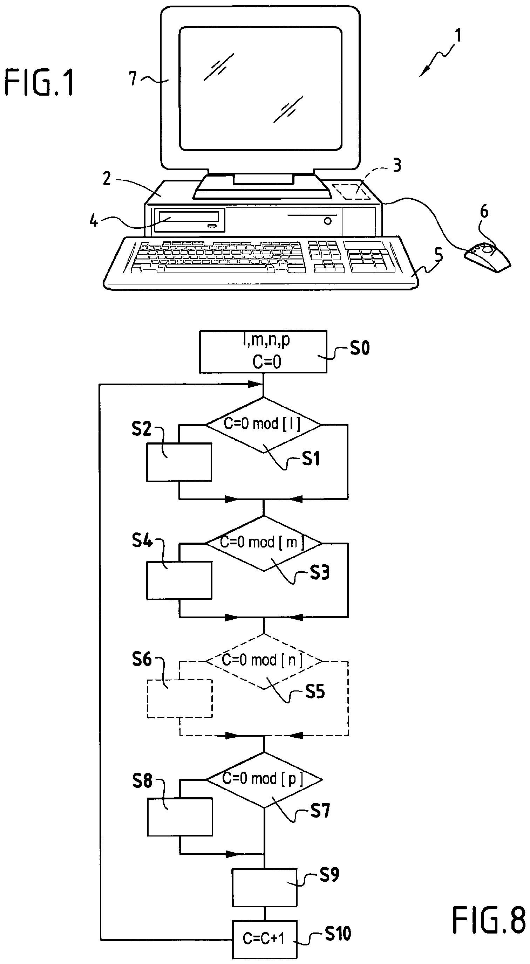

La figure 1 représente un système qui peut être utilisé pour la modélisation du déplacement d'un mannequin virtuel. Ce système comprend une station de travail ou ordinateur 1 disposant de bonnes capacités graphiques, utilisé pour l'exécution d'un programme informatique conçu pour mettre en oeuvre le procédé selon l'invention.

L'ordinateur 1 comprend les moyens matériels que l'on trouve habituellement avec ce type d'appareil. Plus particulièrement, l'ordinateur comprend une unité centrale 2 qui exécute les séquences d'instructions du programme selon le procédé de l'invention, une mémoire centrale 3 qui stocke les données et programmes en cours d'exécution, des supports de stockages de données numériques (disque dur, CD 4, disquette,...) conservant durablement les données et les programmes manipulés, des périphériques d'entrée (clavier 5, souris « 2D » ou « 3D » 6, manette,...) ainsi que des périphériques de sortie (écran 7, casques ou lunettes stéréoscopiques,...) pour pouvoir visualiser le déplacement d'un mannequin virtuel.

Bien entendu, afin d'augmenter la capacité de calcul, la modélisation selon l'invention peut être mise en oeuvre sur plusieurs stations de travail fonctionnant en parallèle.

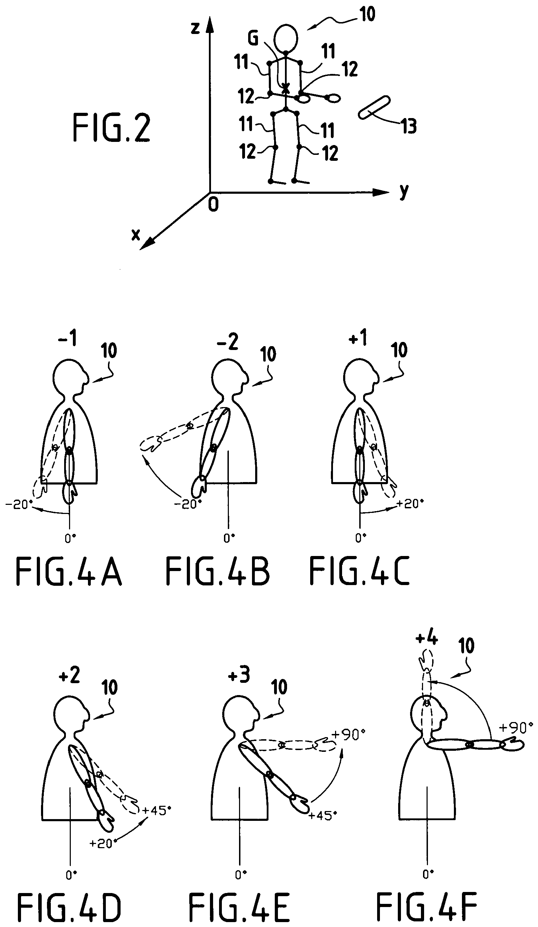

La figure 2, illustre très schématiquement un mannequin virtuel 10 défini par un ensemble « d'objets passifs », c'est-à-dire des membres 11 reliés entre eux par des articulations 12. Le mannequin 10 évolue dans un environnement virtuel caractérisé par un certain nombre d'objets dont une cible 13 à atteindre. Le mannequin 10 ainsi que son environnement sont définis dans un espace métrique (O ; x, y, z).

Grâce à cet espace métrique, la position et l'orientation de chaque membre 11 du mannequin 10 ainsi que la cible 13 à atteindre peuvent être repérées, de façon simple. La position d'un objet quelconque peut être repérée par un ensemble composé de trois coordonnées cartésiennes selon les axes x, y, z et l'orientation de cet objet peut être repérée de façon connue, par trois angles définis par rapport à ces mêmes trois axes x, y, z.

Le mannequin 10 peut être défini à chaque instant par les valeurs des degrés de liberté internes de ses articulations 12 et par sa position globale. La position globale est définie par, par exemple la position du centre de gravité G du mannequin, ainsi que par l'orientation du mannequin autour du vertical, c'est-à-dire autour de l'axe z. Bien entendu, il faut aussi prendre en compte, les paramètres ou contraintes imposées par les limites articulaires et par les liens physiques entre les différents membres 11 de ce mannequin 10.

Ces données et variables définissant le mannequin 10 ainsi que des paramètres définissant son environnement sont stockés dans le support de données numériques 3 du système informatique 1.

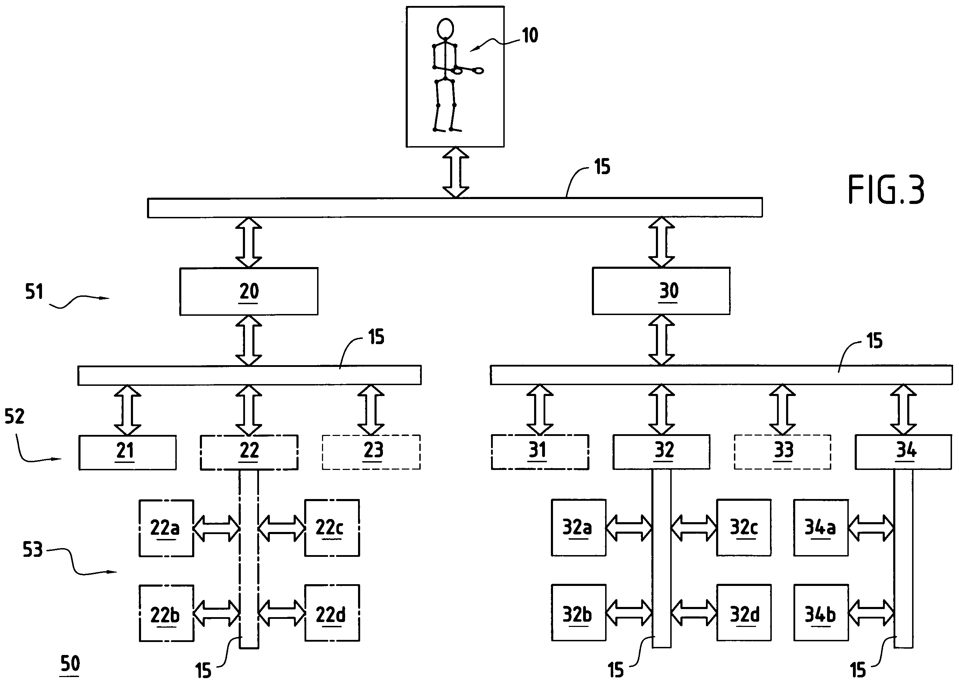

La figure 3 illustre très schématiquement, une architecture d'un système multi-agent 50 selon l'invention, utilisée pour modéliser le déplacement du mannequin virtuel 10. Ce système multi-agent 50 est composé d'un ensemble d'éléments actifs ou agents 20, 21, 22, 23, 30, 31, 32, 33 et 34 qui agissent sur les objets passifs (membres 11 et articulations 12) composant le mannequin 10 en fonction de son environnement.

Les données ou variables définissant le mannequin 100 et son environnement constituent des données partagées 15 au travers duquel les différents agents interagissent.

L'architecture du système multi-agent peut être organisée en plusieurs étages ou niveaux, de façon pyramidale, de sorte que les agents de base contribuent aux actions de ceux qui sont sur un niveau plus élevé.

Dans cet exemple, le système multi-agent 50 présente un premier niveau 51, un deuxième niveau 52 et un troisième niveau 53.

Le premier niveau 51 illustre l'action ou la contribution globale sur le mannequin 10 et comporte la contribution d'un premier agent global 20 et la contribution d'un second agent global 30 agissant sur le mannequin 10 par le biais des données partagées 15.

Le premier agent global 20 agit sur la position globale du mannequin 10 et le second agent global 30 agit sur les degrés de liberté internes d'articulation 12 du mannequin 10.

Le deuxième niveau 52 illustre différentes contributions, émanant des différents types d'agents qui engendrent les contributions des premier et second agents globaux 20 et 30 en interagissant à travers les données partagées 15.

Afin que le mannequin 10 se déplace sans collisions dans son environnement tout en ayant des postures confortables, il suffit que le deuxième niveau 52 du système multi-agent 50 comporte au moins un agent d'attraction, au moins un agent de glissement et au moins un agent d'ergonomie.

Ainsi, le deuxième niveau 52 du système multi-agent 50 peut comporter un agent de glissement 21 (représenté en traits continus) agissant sur la position globale du mannequin 10, un agent d'attraction 32 (représenté en traits continus) agissant sur les degrés de liberté internes d'articulation 12 du mannequin 10 et un agent d'ergonomie 34 (représenté en traits continus) agissant aussi sur les degrés de liberté internes d'articulation 12 du mannequin 10.

Dans ce cas, l'agent de glissement 21 est en réalité confondu avec le premier agent global 20, car il est le seul agent à agir sur la position globale du mannequin 10.

L'agent de glissement 21 va agir de façon globale sur le mannequin pour le faire glisser et/ou tourner sur son environnement de façon à éviter les collisions. En revanche, l'agent d'attraction 32 va agir sur les articulations du mannequin afin par exemple que ses mains atteignent leur cible.

En outre, pour rapprocher le mannequin 10 vers sa cible 13 de façon globale, par exemple en faisant glisser les jambes du mannequin 10 sur le sol de son environnement, le deuxième niveau 52 du système multi-agent 50 peut comporter un agent d'attraction 22 (représenté en traits mixtes) agissant sur la position globale du mannequin 10.

En plus, pour améliorer ou faciliter la recherche de solutions qui évitent les collisions entre le mannequin 10 et son environnement, le deuxième niveau 52 du système multi-agent 50 peut comporter un agent de glissement 31 (représenté en traits mixtes) agissant sur les degrés de liberté internes d'articulation 12 du mannequin 10.

Eventuellement, le deuxième niveau 52 du système multi-agent 50 peut comporter au moins un agent d'opérateur 23, 33 (représenté en traits pointillés) agissant sur la position globale du mannequin 10 et/ou sur ses degrés de liberté internes d'articulation 12.

Le troisième niveau 53 donne à titre d'exemple, quelques agents locaux donnant des contributions élémentaires à certains agents du deuxième niveau 52, toujours par le biais des données partagées 15.

La contribution de l'agent d'attraction 22, agissant sur la position globale du mannequin 10, peut par exemple comporter une contribution d'un agent d'attraction de la main gauche 22a, une contribution d'un agent d'attraction de la main droite 22b, une contribution d'un agent d'attraction de l'orientation 22c, ainsi que d'autres contributions d'agents d'attractions représentés par la référence 22d.

La contribution de l'agent d'attraction 32, agissant sur les degrés de liberté internes d'articulation 12 du mannequin 10, peut par exemple comporter une contribution d'un agent d'attraction du poignet gauche 32a, une contribution d'un agent d'attraction du poignet droit 32b, une contribution d'un agent d'attraction de la torse 32c, ainsi que d'autres contributions d'agents d'attractions représentés par la référence 32d.

La contribution de l'agent d'ergonomie 34 comporte une contribution d'un agent d'amélioration de posture 34a ainsi éventuellement que d'autres contributions d'agents d'ergonomie représentés par la référence 34b.

Ainsi, chaque agent élémentaire possède une fonction déterminée et ne dispose que d'une représentation partielle du mannequin 10 et de son environnement mais peut agir sur ce mannequin 10 en calculant une contribution sur la position globale du mannequin 10 et/ou sur les degrés de liberté internes de ses articulations 12, en tenant compte des ressources et des compétences dont il dispose et en fonction de l'objectif qu'il doit satisfaire.

De plus, l'action ou la contribution de chaque agent est pondérée ou autrement dit, limitée par une norme selon un pas de déplacement linéaire ou angulaire de la position globale du mannequin 10 ou un pas angulaire de ses articulations 12. Ces pas sont prédéfinis de façon à réaliser de petits déplacements élémentaires. Par exemple, le pas de déplacement linéaire peut être compris entre 1 mm et 10 cm.

En outre, les différents agents interagissent de façon hiérarchisée au travers les données numériques partagées 15. La priorité relative de chaque contribution est donnée par la fréquence à laquelle l'agent calcule et intègre sa contribution à la contribution globale du déplacement du mannequin 10. Cette fréquence est définie par rapport à un cadencement des impulsions régulant les étapes de calcul des différents agents.

Autrement dit, l'action de chaque agent est soumise à un taux d'activité prédéterminé, correspondant à l'inverse de sa fréquence d'intervention.

Par exemple, l'évitement de collision étant le but principal dans une modélisation d'accessibilité à un objet dans un environnement encombré, les agents correspondants auront la fréquence la plus élevée, c'est-à-dire, le taux d'activité le plus faible.

Ainsi, un agent ayant la fréquence la plus élevée, c'est-à-dire un taux d'activité égal à 1 va agir à chaque impulsion ou étape de calcul.

Un agent d'attraction 21, 31 a pour but de faire atteindre au mannequin 10 sa cible 13 ou éventuellement ses cibles, alors il ne tient compte que de la position et l'orientation de la cible 13 ainsi que des membres 11 ou articulations 12 du mannequin 10 sur lesquels il agit. Il est indifférent aux dimensions de l'objet à manipuler ou à toutes autres informations.

Un agent de glissement 22, 32 agit pour faire glisser le mannequin 10 sur son environnement de façon à éviter les collisions. La collision peut être caractérisée, de façon connue, par la reconnaissance d'une ligne de collision entre deux objets virtuels. Dans ce cas, la contribution de l'agent de glissement 22, 32 est définie en fonction du gradient de la longueur de cette ligne de collision.

Ainsi les différentes contributions des agents de glissement 22, 32 et d'attraction 21, 31, agissant sur la position globale ou sur la pluralité de degrés de liberté d'articulation 12 du mannequin 10, peuvent déplacer le mannequin 10 pour lui faire atteindre une cible 13 tout en lui évitant les collisions avec son environnement.

En outre, le système multi-agent peut aussi comporter un agent d'opérateur 23 et 33 agissant sur la position globale et/ou sur la pluralité de degrés de liberté d'articulation 12 du mannequin 10 afin de permettre à un opérateur d'agir en temps réel sur le déplacement du mannequin 10. Un taux d'activité peut aussi être attribué aux agents d'opérateur.

Un agent d'opérateur 23, 33 permet à un opérateur d'agir sur la trajectoire du mannequin au cours de sa génération, pour intégrer sa vision globale de la scène ou son expérience. L'opérateur peut ainsi favoriser une direction de déplacement pour une main du mannequin 10 ou pour le corps en entier, ou alors commander directement les degrés de liberté internes des articulations 12 du mannequin 10, en leur donnant une direction de consigne.

Cependant, lors du déplacement du mannequin 10, des postures dangereuses pour le travail réel d'un humain peuvent être réalisées.

Toutefois, grâce à l'intervention de l'agent d'ergonomie 34, l'optimisation de l'ergonomie du mannequin 10 va être réalisée au cours de sa trajectoire.

La contribution de l'agent d'ergonomie 34 est définie par un vecteur ou tableau de scores posturaux. Plusieurs méthodes peuvent être utilisées pour évaluer ces scores posturaux.

Par exemple, l'article de McAttamey et al. intitulé « RULA : A Survey Method for the Investigation of Work-related Upper Limb Disorders », (Applied Ergonomics, vol. 24 no 2, avril 1993 pp 91-99) concernant une méthode d'évaluation des facteurs de risque professionnel de troubles musculo-squelettiques permet d'évaluer des postures au niveau de la nuque, du tronc et des membres supérieurs par un système de cotation. Ce système de cotation permet d'établir une liste d'interventions pour réduire le risque de lésion résultant des mauvaises postures d'un humain.

Les figures 4A à 6E illustrent des exemples, de scores posturaux pour le bras, l'avant-bras et le poignet, basés sur un système de cotation des postures selon la méthode ou technique « RULA ». Ces figures montrent qu'un signe est affecté à chacun des scores RULA qui sont à l'origine tous positifs.

D'une manière générale, la technique RULA fait correspondre un nombre entier naturel positif à l'amplitude du mouvement de chaque membre du mannequin de sorte que plus la posture est dangereuse plus le nombre associé est grand. Ainsi, un score de 1 correspond à l'amplitude de mouvement d'une posture confortable tandis qu'un score de 4 correspond à l'amplitude de mouvement d'une posture dangereuse.

L'agent d'ergonomie 34 a pour objectif de minimiser un critère de pénibilité de posture tout au long de la trajectoire du mannequin 10. Il a alors pour fonction de prendre en compte les contraintes de pénibilité de posture pendant la génération de la trajectoire plutôt que lors d'une analyse de la trajectoire a posteriori comme il est usuel de le faire.

Alors, pour pouvoir définir l'agent d'ergonomie en utilisant le critère postural du type RULA, ce critère est transformé en un critère algébrique selon que chaque score postural est réalisé dans le sens positif ou négatif de l'articulation. Le sens positif peut être prédéfini de façon arbitraire, mais bien entendu la même définition est gardée tout au long de la trajectoire du mannequin 10. Ce sens positif doit être le même pour tous les autres agents agissant sur les degrés de liberté du mannequin.

Par exemple, quand le score est réalisé dans le sens positif de l'articulation, on lui attribue un signe « + », et quand il est réalisé dans le sens négatif, on lui attribue un signe « - ».

Les figures 4A à 4F illustrent quelques diagrammes fournissant des scores posturaux pour le bras. L'exemple de la figure 4A, montre qu'un bras en arrière avec un angle entre 0° et -20° par rapport au tronc du mannequin 10 représente un score postural de -1. La figure 4B, montre qu'un bras en arrière avec un angle inférieur à -20° (par exemple -30°) représente un score postural de -2. La figure 4C, montre qu'un bras en avant avec un angle entre 0° et +20° présente un score postural de +1. La figure 4D montre qu'un bras en avant avec un angle entre +20° et +45° présente un score postural de +2. La figure 4E montre qu'un bras en avant avec un angle entre +45° et +90° présente un score postural de +1. Finalement, la figure 4F, montre qu'un bras en avant faisant un angle supérieur à +90° présente un score postural de +4.

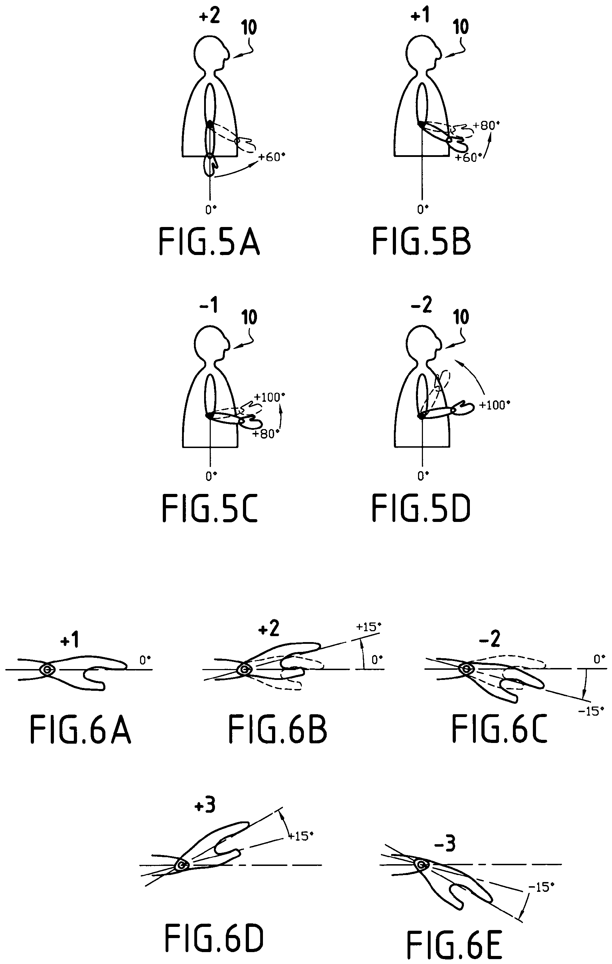

Les figures 5A à 5D donnent des scores posturaux pour l'avant-bras. Un avant-bras avec un angle entre 0° et +60° par rapport au bras présente un score postural de +2 (figure 5A), un avant-bras avec un angle entre +60° et +80° présente un score postural de +1 (figure 5B), un avant-bras avec un angle entre +80° et +100° présente un score postural de -1 (figure 5C), et finalement un avant-bras faisant un angle supérieur à +100° présente un score postural de -2 (figure 5D).

Les figures 6A à 6E donnent des scores posturaux pour le poignet du mannequin 10. Un poignet aligné avec l'avant bras, c'est-à-dire ayant un angle de 0° par rapport à l'avant-bras présente un score postural de +1 (figure 6A), un poignet avec un angle entre 0° et +15° par rapport à l'avant bras présente un score postural de +2 (figure 6B), un poignet avec un angle entre 0° et -15° présente un score postural de -2 (figure 6C), un poignet avec un angle supérieur à +15° présente un score postural de +3 (figure 6D), et finalement un poignet avec un angle inférieur à -15° présente un score postural de -3 (figure 6E).

Cependant, la méthode RULA est limitée aux degrés de liberté principaux, et certains degrés de liberté n'ont pas de score associé. Par conséquent, pour les degrés de liberté n'ayant pas de score RULA spécifique (par exemple l'articulation de la clavicule), la méthode selon l'invention, attribue un score de +1, 0, ou -1 selon le déplacement de l'articulation. Ainsi, le confort de la posture est estimé avec une très grande précision.

En outre, pour chaque degré de liberté d'articulation 12 du mannequin 10 et afin d'éviter les oscillations d'articulation autour de la position de changement de signe du score algébrique, on attribue un score de zéro à un intervalle ouvert autour de cette position, et dont le rayon de cet intervalle est égal au pas de déplacement articulaire prédéfini selon le degré de liberté considéré.

Ainsi, le procédé et le système selon l'invention permettent de former un tableau ou vecteur de scores posturaux algébriques suivant les degrés de liberté de toutes les articulations du mannequin et à tout instant. Ce vecteur peut être formé comme ci-dessus, à partir de la technique RULA ou d'une toute autre technique posturale.

Par la suite, ce vecteur est normé par l'une quelconque des applications de normalisation définissant une même topologie.

A titre d'exemple, la normalisation est effectuée à l'aide de la norme infinie. Ceci est réalisé en divisant toutes les composantes du vecteur de scores posturaux par la valeur absolue maximum de ces composantes afin d'obtenir un vecteur de norme 1 au sens de la norme infinie. Cette normalisation conserve l'importance relative du score RULA algébrique construite pour chaque articulation 12 du mannequin 10.

Ensuite, le vecteur normé de scores posturaux est pondéré par le ou les pas de déplacement articulaire du mannequin 10.

Il est possible que le pas de déplacement articulaire soit prédéfini selon le type d'articulation. On peut par exemple attribuer un pas d'articulation au coude différent de celui attribué au poignet. Dans ce cas, on multiplie chaque composante du vecteur normé de scores posturaux par son pas de déplacement articulaire correspondant afin de former un vecteur de scores posturaux pondérés.

Il est aussi envisageable que le pas de déplacement articulaire soit constant pour toutes les articulations 12. Dans ce cas, il suffit de multiplier le vecteur normé de scores posturaux par ce pas constant de déplacement articulaire afin de former un vecteur de scores posturaux pondérés.

Bien entendu, il est possible de choisir un pas de déplacement articulaire aussi petit que le calcul numérique le permet. Un faible pas de déplacement augmente la finesse du mouvement des articulations 12 mais en revanche augmente le temps de calcul.

Ainsi, un pas de déplacement articulaire correspondant à un angle compris entre 0,001 rad et 0,1 rad, fournit un bon compromis entre une rapidité de calcul et une modélisation optimale du déplacement du mannequin.

Enfin, la contribution de l'agent d'ergonomie est déterminée en inversant le signe du vecteur de scores posturaux pondérés. Autrement dit, la contribution de l'agent d'ergonomie est un vecteur composé des opposés des scores posturaux pour chaque articulation. Ainsi, l'articulation est déplacée dans le sens positif si le score est négatif, et vice versa. Ceci permet de minimiser le score postural d'une articulation avec une correction proportionnelle à la valeur de ce score, c'est-à-dire plus le score postural d'une articulation est élevé en valeur absolue, plus la contribution de correction de la posture de cette articulation va avoir de l'importance dans la contribution globale.

Prenons par exemple, un mannequin dont le bras présente une amplitude postural correspondant à un angle de 90° (π/2 rad), l'avant bras un angle de 30° (π/6 rad) et le poignet un angle de -20° (-π/9 rad). D'après les scores posturaux fournis par les figures 4A à 6E, le vecteur de score RULA algébrique pour le bras, l'avant-bras et le poignet, correspond à (+4 ; +2 ; -3).

Le vecteur normé est alors donné par (1 ; 1/2 ; -3/4) et dans le cas où le pas de déplacement articulaire est par exemple égal à 0,01 rad, le vecteur normé de scores posturaux pondérés est de la forme (0,01 ; 0,005 ; -0,00075) et par conséquent, la contribution de l'agent d'ergonomie est donné par le vecteur (-0,01 ; -0,005 ; +0,00075). Cet exemple montre que l'agent d'ergonomie agit plus rapidement sur les articulations pour lesquelles les postures sont les moins confortables.

En effet, les figures 7A à 7D illustrent une séquence de correction de la posture d'un mannequin 10 sous l'action de l'agent d'ergonomie agissant seul, c'est-à-dire sans la contribution des agents d'attraction ou de glissement. La figure 7A montre une position de départ très inconfortable, voire dangereuse où le dos présente un score postural de 6. La figure 7B montre que cette posture initiale du dos est très rapidement corrigée. Finalement, en passant par la séquence de la figure 7C, l'agent d'ergonomie arrive à une posture confortable (figure 7D) pour laquelle le score RULA est le plus faible.

Conformément à l'invention, la contribution de l'agent d'ergonomie 34 est calculée et intégrée automatiquement à la contribution globale sur le mannequin 10 à une fréquence déterminée par le taux d'activité attribué à l'agent d'ergonomie 34.

Etant donné que l'optimisation de la posture est un objectif moins prioritaire que l'évitement des collisions, ou l'attraction par exemple, des mains du mannequin vers leur cible, cet agent d'ergonomie 34 a un taux d'activité élevé, c'est-à-dire une fréquence faible.

En général, les taux d'activité des agents de glissement sont les plus faibles et celui de l'agent d'ergonomie est le plus élevé.
A titre d'exemple, le taux d'activité d'un agent de glissement peut être choisi égal à 1 ou 2, le taux d'activité de l'agent d'attraction peut être un nombre entier compris entre 2 et 4, le taux d'activité de l'agent d'opérateur peut être un nombre entier compris entre 2 et 4, et le taux d'activité de l'agent d'ergonomie peut être un nombre entier compris entre 5 et 15.

Ainsi, lorsque le taux d'activité de l'agent d'ergonomie 34 est égal à dix, la contribution de cet agent est calculée et appliquée automatiquement au mannequin 10 une fois toutes les dix étapes de calcul.

Conformément à l'invention, la figure 8 est un organigramme illustrant les étapes principales d'un procédé multi-agent numérique modélisant le déplacement d'un mannequin virtuel 10 dans un environnement virtuel (voir aussi les figures précédentes).

L'étape S0 est une initialisation de l'organigramme où différents paramètres sont définis. Par exemple, un compteur « C » de cadencement des impulsions ou étapes de calcul de la modélisation est initialisé (c'est-à-dire C=0).

Par ailleurs, la priorité relative des agents peut être prédéfinie à l'étape S0, étant donné que ces agents partagent les mêmes données numériques et interagissent entre eux de façon hiérarchisée.

Chaque agent est alors soumis à un taux d'activité exprimé par un entier naturel non nul caractérisant l'inverse de sa fréquence d'action. Le taux d'activité de chaque agent peut varier au cours de la modélisation du déplacement du mannequin 10 en fonction par exemple de l'encombrement de l'environnement ou de l'éloignement de la cible à atteindre.

Dans cet exemple, pour des raisons de simplicité, les agents d'attraction 22, 32, de glissements 21, 31, d'opérateurs 23, 33, et d'ergonomie 34 sont hiérarchisés en attribuant à chacun d'eux un taux d'activité stationnaire tout au long du déplacement du mannequin 10. Ainsi, des entiers naturels l, m, n et p, sont donnés pour définir les taux d'activités des agents d'attraction 22, 32, de glissements 21, 31, d'opérateur 23, 33 et de l'agent d'ergonomie 34 respectivement.

De même, les pas de déplacement linéaire et d'orientation du mannequin autour du vertical ainsi que les pas d'articulations peuvent aussi être définis à l'étape S0. Il est possible de choisir un pas variable, pour une articulation 12 donnée, en fonction par exemple de la distance entre le mannequin 10 et la cible 13. On peut aussi attribuer des pas différents selon la nature de l'articulation 12. On peut aussi choisir un pas constant optimal pour toutes les articulations 12 et tout au long de la trajectoire du mannequin 10.

L'étape S1 est un test indiquant si la valeur du compteur est un multiple de l, ou autrement dit si le compteur est égal à zéro modulo l (C=0 mod l).

Dans l'affirmative, la contribution de l'agent d'attraction 22, 32 est calculée à l'étape S2 avant de passer à l'étape suivante S3. Par exemple, si l=3 la contribution de l'agent d'attraction agit toutes les 3 impulsions de cadencement, c'est-à-dire lorsque le compteur est égal à 3, 6, 9, etc.

Si ce n'est pas le cas, on passe directement au test de l'étape S3 qui indique si la valeur du compteur est un multiple de m (C=0 mod m).

Dans l'affirmative, la contribution de l'agent de glissement 21, 31 est calculée à l'étape S4 avant de passer à l'étape suivante S5.

Si ce n'est pas le cas, on passe directement au test de l'étape S5 qui indique si la valeur du compteur est un multiple de n (C=0 mod n).

Dans l'affirmative, la contribution de l'agent d'opérateur 23, 33 est calculée à l'étape S6 avant de passer à l'étape suivante S7 (les étapes S5 et S6 sont facultatives).

Si ce n'est pas le cas, on passe directement au test de l'étape S7 qui indique si la valeur du compteur est un multiple de p (C=0 mod p).

Dans l'affirmative, la contribution de l'agent d'ergonomie 34 est calculée à l'étape S8 selon le vecteur composé des opposés des scores posturaux pour chaque articulation, avant de passer à l'étape suivante S9. Selon cet exemple, la posture du mannequin est automatiquement corrigée toutes les p étapes de calcul.

Si la valeur du compteur, à l'étape S7, n'est pas un multiple de p, on passe directement à l'étape S9 où la contribution globale est appliquée au mannequin 10 pour le déplacer ou le manipuler selon les résultats des calculs des étapes précédentes.

A l'étape S10, le compteur est incrémenté (C= C + 1) avant de boucler à l'étape S1.

Ainsi, le système multi-agent selon l'invention comporte au moins un agent d'attraction 22, 32, au moins un agent de glissement 21, 31, (éventuellement au moins un agent d'opérateur 23, 33) et au moins un agent d'ergonomie 34 qui permet une optimisation automatique de l'ergonomie du mannequin 10 au cours de sa trajectoire.

Les figures 9A à 9D sont des séquences illustrant le déplacement d'un mannequin 10 avec la contribution de l'agent d'ergonomie, à partir d'une position initiale (figure 9A) vers une position finale (figure 9D) où les mains du mannequin 10 atteignent leur cible composée de deux poignées 13a, 13b.

En revanche les figures 10A à 10D sont des séquences illustrant le déplacement d'un mannequin 10, sans la contribution de l'agent d'ergonomie, à partir d'une même position initiale (figure 10A) vers une position finale (figure 10D), moins confortable que celle de la figure 9D où les mains du mannequin 10 atteignent aussi les deux poignées 13a, 13b.

L'optimisation de l'ergonomie dans les figures 9A à 9D engendre des modifications des degrés de liberté internes du mannequin 10 de façon à améliorer le confort de la posture courante tout au long de la trajectoire.

Cette modification des degrés de liberté internes a alors un effet sur la position globale du mannequin 10, grâce aux agents d'attraction. En effet, les figures 9B à 9D montrent, en les comparant aux figures 10B à 10D que les postures confortables prises par le mannequin 10, dû à l'optimisation de l'ergonomie, vont alors éloigner les mains du mannequin 10 de leur cible 13a, 13b respective, ce qui va être compensé par une attraction globale du mannequin 10 vers ces cibles 13a, 13b.

## Revendications

1. Procédé multi-agent de déplacement d'un mannequin virtuel (10) dans un environnement virtuel, le mannequin (10) étant défini par une position globale et une pluralité de degrés de liberté d'articulation (12), le procédé comportant:
- une étape de déplacement du mannequin (10) vers une cible (13) au moyen d'un agent d'attraction (32) agissant sur la pluralité de degrés de liberté d'articulation (12) du mannequin (10);
- une étape d'évitement de collisions du mannequin (10) avec l'environnement au moyen d'un agent de glissement (21) agissant sur la position globale du mannequin (10) en fonction de paramètres définissant cet environnement;
**caractérisé en ce qu'**il comporte en outre une étape de correction automatique de la posture du mannequin (10) au cours de son déplacement vers la cible (13) au moyen d'un agent d'ergonomie (34) agissant sur la pluralité de degrés de liberté d'articulation (12) du mannequin (10), comportant les étapes suivantes :
- détermination d'un vecteur de scores posturaux suivant les degrés de liberté d'articulation (12) du mannequin (10),
- normalisation dudit vecteur de scores posturaux afin de former un vecteur normé de scores posturaux,
- pondération dudit vecteur normé de scores posturaux afin de former un vecteur de scores posturaux pondérés,
- inversion du signe dudit vecteur de scores posturaux pondérés afin de déterminer la contribution de l'agent d'ergonomie (34).

2. Procédé selon la revendication 1, **caractérisé en ce que** le procédé comporte en outre une étape de déplacement de façon globale vers la cible (13) au moyen d'un agent d'attraction (22) agissant sur la position globale (G) du mannequin (10).

3. Procédé selon l'une quelconque des revendications 1 et 2, **caractérisé en ce que** pour chaque degré de liberté d'articulation (12) du mannequin (10), un score de zéro est attribué à un intervalle ouvert définit autour de la position de changement de signe du score algébrique, ledit intervalle ayant un rayon égal à un pas de déplacement articulaire prédéfini selon le degré de liberté considéré.

4. Procédé selon l'une quelconque des revendications 1 à 3, **caractérisé en ce que** l'étape de normalisation est réalisée en divisant toutes les composantes du vecteur de scores posturaux par la valeur absolue maximum de ces composantes.

5. Procédé selon l'une quelconque des revendications 1 à 4, **caractérisé en ce que** l'étape de pondération est réalisée en multipliant chaque composante du vecteur normé de scores posturaux par le pas de déplacement articulaire prédéfini selon le type d'articulation (12).

6. Procédé selon la revendication 5, **caractérisé en ce que** le pas de déplacement articulaire est constant pour toutes les articulations (12).

7. Procédé selon l'une quelconque des revendications 5 et 6, **caractérisé en ce que** le pas de déplacement articulaire est un angle compris entre 0,001 rad et 0,1 rad.

8. Procédé selon l'une quelconque des revendications 1 à 7, **caractérisé en ce que** l'étape de détermination du vecteur de scores posturaux est réalisée en transformant un critère postural du type RULA en un critère algébrique selon que chaque score postural est réalisé dans le sens positif ou négatif de l'articulation (12).

9. Procédé selon l'une quelconque des revendications 1 à 8, **caractérisé en ce que** le procédé comporte en outre une étape supplémentaire d'évitement de collisions du mannequin (10) avec l'environnement au moyen d'un agent de glissement (31) agissant sur la pluralité de degrés de liberté d'articulation (12) du mannequin (10) en fonction des paramètres définissant cet environnement.

10. Procédé selon l'une quelconque des revendications 1 à 9, **caractérisé en ce que** le procédé comporte en outre une étape de déplacement du mannequin (10) en temps réel par un opérateur au moyen d'au moins un agent d'opérateur (23, 33) agissant sur la position globale et/ou la pluralité de degrés de liberté d'articulation (12) du mannequin (10).

11. Procédé selon l'une quelconque des revendications 1 à 10, **caractérisé en ce que** les agents d'attraction (22, 32), de glissement (21, 31), d'ergonomie (34) et d'opérateur (23, 33) interagissent de façon hiérarchisée au travers de données numériques partagées (15) définissant le mannequin (10) et son environnement.

12. Procédé selon la revendication 11, **caractérisé en ce que** les agents d'attraction (22, 32), de glissement (21, 31), d'ergonomie (34) et d'opérateur (23, 33) sont hiérarchisés en attribuant à chacun d'eux un taux d'activité stationnaire tout au long du déplacement du mannequin (10).

13. Procédé selon la revendication 12, **caractérisé en ce que** le taux d'activité des agents de glissement (21, 31) est le plus faible et celui de l'agent d'ergonomie (34) est le plus élevé.

14. Procédé selon l'une quelconque des revendications 12 et 13, **caractérisé en ce que** le taux d'activité de l'agent de glissement (22, 32) est un nombre entier compris entre 1 et 2, le taux d'activité de l'agent d'attraction (21, 31) est un nombre entier compris entre 2 et 4, le taux d'activité de l'agent d'ergonomie (34) est un nombre entier compris entre 5 et 15, et le taux d'activité de l'agent d'opérateur (23, 33) est un nombre entier compris entre 2 et 4.

15. Système multi-agent de déplacement d'un mannequin virtuel (10) dans un environnement virtuel, le mannequin (10) étant défini par une position globale et une pluralité de degrés de liberté d'articulation (12), le système comportant:
- un agent d'attraction (32) destiné à agir sur la pluralité de degrés de liberté d'articulation (12) du mannequin (10) pour le déplacer vers une cible (13) ;
- un agent de glissement (21) destiné à agir sur la position globale du mannequin (10) en fonction de paramètres définissant l'environnement pour éviter les collisions du mannequin (10) avec cet environnement ; **caractérisé en ce qu'**il comporte en outre
un agent d'ergonomie (34) destiné à agir sur la pluralité de degrés de liberté d'articulation (12) du mannequin (10) pour corriger automatiquement la posture du mannequin (10) au cours de son déplacement vers la cible (13), l'agent d'ergonomie (34) comportant des moyens pour exécuter les étapes suivantes :
détermination d'un vecteur de scores posturaux suivant les degrés de liberté d'articulation (12) du mannequin (10),
- normalisation dudit vecteur de scores posturaux afin de former un vecteur normé de scores posturaux,
- pondération dudit vecteur normé de scores posturaux afin de former un vecteur posturaux pondérés,
- inversion du signe dudit vecteur de scores posturaux pondérés afin de déterminer la contribution de l'agent d'ergonomie (34).

16. Système selon la revendication 15, **caractérisé en ce que** les scores posturaux sont basés sur un critère algébrique d'un système postural du type RULA.

17. Système selon l'une quelconque des revendications 15 et 16, **caractérisé en ce que** chaque degré de liberté de la pluralité de degrés de liberté d'articulation est définit par un pas de déplacement angulaire compris entre 0,001 rad et 0,1 rad.

18. Système selon l'une quelconque des revendications 15 à 17, **caractérisé en ce que** le système comporte en outre un agent d'attraction (22) destiné à agir sur la position globale du mannequin (10) pour le déplacer de façon globale vers la cible (13).

19. Système selon l'une quelconque des revendications 15 à 18, **caractérisé en ce que** le système comporte en outre un agent de glissement (31) destiné à agir sur la pluralité de degrés de liberté d'articulation (12) du mannequin (10) en fonction des paramètres définissant l'environnement pour éviter les collisions du mannequin (10) avec cet environnement.

20. Système selon l'une quelconque des revendications 15 à 19, **caractérisé en ce que** le système comporte en outre au moins un agent d'opérateur (23, 33) destiné à agir sur la position globale et/ou la pluralité de degrés de liberté d'articulation du mannequin (10) afin de permettre à un opérateur d'agir en temps réel sur le déplacement du mannequin (10).

21. Système selon l'une quelconque des revendications 15 à 20, **caractérisé en ce que** les agents d'attraction (22, 32), de glissement (21, 31), d'ergonomie (34), et d'opérateur (23, 33) sont destinés à interagir de façon hiérarchisée au travers de données numériques partagées (15) définissant le mannequin (10) et son environnement..

22. Programme d'ordinateur comprenant des instructions qui, lorsque le programme est exécuté par un ordinateur, conduisent celui-ci à mettre en oeuvre le procédé selon l'une quelconque des revendications 1 à 14.

## Patentansprüche

1. Multiagentenverfahren zum Bewegen einer virtuellen Puppe (10) in einer virtuellen Umgebung, wobei die Puppe (10) durch eine globale Position und eine Vielzahl von Freiheitsgraden der Gelenke (12) definiert ist, wobei das Verfahren umfasst:
- einen Schritt des Bewegens der Puppe (10) zu einem Ziel (13) mittels eines Anziehungsagenten (32), der auf die Vielzahl von Freiheitsgraden der Gelenke (12) der Puppe (10) einwirkt;
- einen Schritt des Vermeidens von Kollisionen der Puppe (10) mit der Umgebung mittels eines Gleitagenten (21), der auf die globale Position der Puppe (10) in Abhängigkeit von den diese Umgebung definierenden Parametern einwirkt; **dadurch gekennzeichnet, dass** es ferner einen Schritt des automatischen Korrigierens der Haltung der Puppe (10) während ihrer Bewegung zum Ziel (13) mittels eines Ergonomieagenten (34) umfasst, der auf die Vielzahl von Freiheitsgraden der Gelenke (12) der Puppe (10) einwirkt, umfassend die folgenden Schritte:
- Bestimmen eines Haltungs-Scorevektors entsprechend den Freiheitsgraden der Gelenke (12) der Puppe (10),
- Normieren des Haltungs-Scorevektors, um einen normierten Haltungs-Scorevektor zu bilden,
- Wichten des normierten Haltungs-Scorevektors, um einen gewichteten Haltungs-Scorevektor zu bilden,
- Invertieren des Vorzeichens des gewichteten Haltungs-Scorevektors, um den Beitrag des Ergonomieagenten (34) zu bestimmen.

2. Verfahren gemäß Anspruch 1, **dadurch gekennzeichnet, dass** das Verfahren ferner einen Schritt der globalen Annäherung an das Ziel (13) mittels eines Anziehungsagenten (22) umfasst, der auf die globale Position (G) der Puppe (10) einwirkt.

3. Verfahren gemäß einem der Ansprüche 1 und 2, **dadurch gekennzeichnet, dass** für jeden Freiheitsgrad der Gelenke (12) der Puppe (10) ein Wert von Null einem offenen Intervall zugeordnet wird, das um die Position des Vorzeichenwechsels des algebraischen Scores herum definiert ist, wobei das Intervall einen Radius aufweist, der gleich einem entsprechend dem betrachteten Freiheitsgrad vorbestimmten Gelenkverschiebungsschritt ist.

4. Verfahren gemäß einem der Ansprüche 1 bis 3, **dadurch gekennzeichnet, dass** der Normierungsschritt durch Dividieren aller Komponenten des Haltungs-Scorevektors durch den maximalen Absolutwert dieser Komponenten durchgeführt wird.

5. Verfahren gemäß einem der Ansprüche 1 bis 4, **dadurch gekennzeichnet, dass** der Wichtungsschritt durch Multiplizieren jeder Komponente des normierten Haltungs-Scorevektors mit dem entsprechend der Art des Gelenks (12) vorbestimmten Gelenkverschiebungsschritt durchgeführt wird.

6. Verfahren gemäß Anspruch 5, **dadurch gekennzeichnet, dass** der Gelenkverschiebungsschritt für alle Gelenke (12) konstant ist.

7. Verfahren gemäß einem der Ansprüche 5 und 6, **dadurch gekennzeichnet, dass** es sich bei dem Gelenkverschiebungsschritt um einen Winkel zwischen 0,001 rad und 0,1 rad handelt.

8. Verfahren gemäß einem der Ansprüche 1 bis 7, **dadurch gekennzeichnet, dass** der Schritt des Bestimmens des Haltungs-Scorevektors durch Transformieren eines Haltungskriteriums vom Typ RULA in ein algebraisches Kriterium durchgeführt wird, je nachdem, ob jeder Haltungs-Score in der positiven oder negativen Richtung des Gelenks (12) durchgeführt wird.

9. Verfahren gemäß einem der Ansprüche 1 bis 8, **dadurch gekennzeichnet, dass** das Verfahren ferner einen zusätzlichen Schritt des Vermeidens von Kollisionen der Puppe (10) mit der Umgebung mittels eines Gleitagenten (31) umfasst, der auf die Vielzahl von Freiheitsgraden der Gelenke (12) der Puppe (10) in Abhängigkeit von den diese Umgebung definierenden Parametern einwirkt.

10. Verfahren gemäß einem der Ansprüche 1 bis 9, **dadurch gekennzeichnet, dass** das Verfahren ferner einen Schritt des Bewegens der Puppe (10) in Echtzeit durch einen Bediener mittels mindestens eines Bedienagenten (23, 33) umfasst, der auf die globale Position und/oder die Vielzahl von Freiheitsgraden der Gelenke (12) der Puppe (10) einwirkt.

11. Verfahren gemäß einem der Ansprüche 1 bis 10, **dadurch gekennzeichnet, dass** die Agenten der Anziehung (22, 32), des Gleitens (21, 31), der Ergonomie (34) und der Bedienung (23, 33) durch gemeinsame digitale Daten (15), die die Puppe (10) und ihre Umgebung definieren, hierarchisch zusammenwirken.

12. Verfahren gemäß Anspruch 11, **dadurch gekennzeichnet, dass** die Agenten der Anziehung (22, 32), des Gleitens (21, 31), der Ergonomie (34) und der Bedienung (23, 33) hierarchisiert werden, indem jedem von ihnen eine stationäre Aktivitätsrate während der Bewegung der Puppe (10) zugeordnet wird.

13. Verfahren gemäß Anspruch 12, **dadurch gekennzeichnet, dass** die Aktivitätsrate der Gleitagenten (21, 31) die niedrigste und die des Ergonomieagenten (34) die höchste ist.

14. Verfahren gemäß einem der Ansprüche 12 und 13, **dadurch gekennzeichnet, dass** die Aktivitätsrate des Gleitagenten (22, 32) eine ganze Zahl zwischen 1 und 2 ist, die Aktivitätsrate des Anziehungsagenten (21, 31) eine ganze Zahl zwischen 2 und 4 ist, die Aktivitätsrate des Ergonomieagenten (34) eine ganze Zahl zwischen 5 und 15 ist und die Aktivitätsrate des Bedienagenten (23, 33) eine ganze Zahl zwischen 2 und 4 ist.

15. Multiagentensystem zum Bewegen einer virtuellen Puppe (10) in einer virtuellen Umgebung, wobei die Puppe (10) durch eine globale Position und eine Vielzahl von Freiheitsgraden der Gelenke (12) definiert ist, wobei das System umfasst:
einen Anziehungsagenten (32), der dazu bestimmt ist, auf die Vielzahl von Freiheitsgraden der Gelenke (12) der Puppe (10) einzuwirken, um sie zu einem Ziel (13) zu bewegen,
einen Gleitagenten (21), der dazu bestimmt ist, auf die globale Position der Puppe (10) in Abhängigkeit von den die Umgebung definierenden Parametern einzuwirken, um Kollisionen der Puppe (10) mit dieser Umgebung zu vermeiden,
**dadurch gekennzeichnet, dass** es ferner einen Ergonomieagenten (34) umfasst, der dazu bestimmt ist, auf die Vielzahl von Freiheitsgraden der Gelenke (12) der Puppe (10) einzuwirken, um die Haltung der Puppe (10) während ihrer Bewegung zum Ziel (13) automatisch zu korrigieren, wobei der Ergonomieagent (34) Mittel umfasst, um die folgenden Schritte auszuführen:
- Bestimmen eines Haltungs-Scorevektors entsprechend den Freiheitsgraden der Gelenke (12) der Puppe (10),
- Normieren des Haltungs-Scorevektors, um einen normierten Haltungs-Scorevektor zu bilden,
- Wichten des normierten Haltungs-Scorevektors, um einen gewichteten Haltungsvektor zu bilden,
- Invertieren des Vorzeichens des gewichteten Haltungs-Scorevektors, um den Beitrag des Ergonomieagenten (34) zu bestimmen.

16. System gemäß Anspruch 15, **dadurch gekennzeichnet, dass** die Haltungs-Scores auf einem algebraischen Kriterium eines Haltungssystems vom Typ RULA basieren.

17. System gemäß einem der Ansprüche 15 und 16, **dadurch gekennzeichnet, dass** jeder Freiheitsgrad der Vielzahl von Freiheitsgraden der Gelenke durch einen Verschiebungsschrittwinkel zwischen 0,001 rad und 0,1 rad definiert ist.

18. System gemäß einem der Ansprüche 15 bis 17, **dadurch gekennzeichnet, dass** das System ferner einen Anziehungsagenten (22) umfasst, der dazu bestimmt ist, auf die globale Position der Puppe (10) einzuwirken, um sie global zum Ziel (13) zu bewegen.

19. System gemäß einem der Ansprüche 15 bis 18, **dadurch gekennzeichnet, dass** das System ferner einen Gleitagenten (31), umfasst, der dazu bestimmt ist, auf die Vielzahl von Freiheitsgraden der Gelenke (12) der Puppe (10) in Abhängigkeit von den die Umgebung definierenden Parametern einzuwirken, um Kollisionen der Puppe (10) mit dieser Umgebung zu vermeiden.

20. System gemäß einem der Ansprüche 15 bis 19, **dadurch gekennzeichnet, dass** das System ferner mindestens einen Bedienagenten (23, 33) umfasst, der dazu bestimmt ist, auf die globale Position und/oder die Vielzahl von Freiheitsgraden der Gelenke der Puppe (10) einzuwirken, um es einem Bediener zu ermöglichen, in Echtzeit auf die Bewegung der Puppe (10) einzuwirken.

21. System gemäß einem der Ansprüche 15 bis 20, **dadurch gekennzeichnet, dass** die Agenten der Anziehung (22, 32), des Gleitens (21, 31), der Ergonomie (34) und der Bedienung (23, 33) dazu bestimmt sind, durch gemeinsame digitale Daten (15), die die Puppe (10) und ihre Umgebung definieren, hierarchisch zusammenzuwirken.

22. Computerprogramm, umfassend Anweisungen, die, wenn das Programm von einem Computer ausgeführt wird, diesen veranlassen, das Verfahren gemäß einem der Ansprüche 1 bis 14 durchzuführen.

## Claims

1. A multi-agent method for moving a virtual dummy (10) in a virtual environment, the dummy (10) being defined by an overall position and by a plurality of degrees of freedom for joints (12), the method comprising:
• a step of moving the dummy (10) towards a target (13) by means of an attraction agent (32) acting on the plurality of degrees of freedom of the joints (12) of the dummy (10); and
• a step of avoiding collisions between the dummy (10) and the environment by means of an avoider agent (21) acting on the overall position of the dummy (10) as a function of parameters defining said environment;
the method being **characterized in that** it further comprises a step of automatically correcting the posture of the dummy (10) during its movement towards the target (13) by means of an ergonomy agent (34) acting on the plurality of degrees of freedom for the joints (12) of the dummy (10), and comprising the following steps:
• determining a posture score vector depending on the degrees of freedom of the joints (12) of the dummy (10) ;
• normalizing said posture score vector in order to form a normalized posture score vector;
• weighting said normalized posture score vector in order to form a weighted posture score vector; and
• inverting the sign of said weighted posture score vector so as to determine the contribution of the ergonomy agent (34).

2. A method according to claim 1, **characterized in that** it further includes a step of overall movement towards the target (13) by means of an attraction agent (22) acting on the overall position (G) of the dummy (10).

3. A method according to any of claims 1 and 2 **characterized in that** it for each degree of freedom of the joints (12) of the dummy (10), a score of zero is allocated to an open interval defined about the position in which the algebraic score changes sign, said interval having a radius equal to one joint movement pitch predefined for the degree of freedom under consideration.

4. A method according to any of claims 1 to 3, **characterized in that** the normalization step is implemented by dividing all of the components of the posture score vector by the maximum absolute value of said components.

5. A method according to any of claims 1 to 4, **characterized in that** the weighting step is implemented by multiplying each component of the normalized posture score vector by the joint movement pitch predefined depending on the type of joint (12).

6. A method according to claim 5, **characterized in that** the joint movement pitch is constant for all of the joints (12).

7. A method according to claim 5 or claim 6, **characterized in that** the joint movement pitch is an angle lying in the range 0.001 rad to 0.1 rad.

8. A method according to any of claims 1 to 7, **characterized in that** the step of determining the posture score vector is implemented by transforming a RULA type posture criterion into an algebraic criterion depending on whether each posture score is implemented in the positive direction or the negative direction of the joint (12) .

9. A method according to any of claims 1 to 8, **characterized in that** the method further includes an additional step of avoiding collisions between the dummy (10) and the environment by means of an avoider agent (31) acting on the plurality of degrees of freedom of the joints (12) of the dummy (10) as a function of parameters defining said environment.

10. A method according to any of claims 1 to 9, **characterized in that** the method further includes a step of an operator moving the dummy (10) in real time by means of at least one operator agent (23,33) acting on the overall position and/or on the plurality of degrees of freedom of the joints (12) of the dummy (10).

11. A method according to any of claims 1 to 10, **characterized in that** the attraction agents (22,32), the avoider agents (21,31), the ergonomy agent (34), and the operator agents (23,33) interact in a hierarchical manner through shared digital data (15) defining the dummy (10) and its environment.

12. A method according to claim 11, **characterized in that** the attraction agents (22,32), the avoider agents (21,31), the ergonomy agent (34), and the operator agents (23,33) are organized hierarchically by giving each of them an activity rate that is steady throughout the movement of the dummy (10).

13. A method according to claim 12, **characterized in that** the activity rate of the avoider agents (21,31) is the shortest and that of the ergonomy agent (34) is the longest.

14. A method according to any of claims 12 to 13, **characterized in that** the activity rate of the avoider agents (22,32) is an integer in the range 1 to 2, the activity rate of the attraction agents (21,31) is an integer in the range 2 to 4, the activity rate of the ergonomy agent (34) is an integer in the range 5 to 15, and the activity rate of the operator agent (23,33) is an integer in the range 2 to 4.

15. A multi-agent system for moving a virtual dummy (10) in a virtual environment, the dummy (10) being defined by an overall position and by a plurality of degrees of freedom for joints (12), the system comprising:
• an attraction agent (32) for acting on the plurality of degrees of freedom of the joints (12) of the dummy to move the dummy (10) towards a target; and
• an avoider agent (21) for acting on the overall position of the dummy (10) as a function of parameters defining the environment so as to avoid collisions between the dummy (10) and said environment;
**characterized in that** it further comprises an ergonomy agent (34) for acting on the plurality of degrees of freedom of the joints (12) of the dummy (10) in order to correct the posture of the dummy automatically during its movement towards the target (13), the ergonomy agent (34) comprising means to perform the following steps:
• determining a posture score vector depending on the degrees of freedom of the joints (12) of the dummy (10);
• normalizing said posture score vector in order to form a normalized posture score vector;
• weighting said normalized posture score vector in order to form a weighted posture score vector; and
• inverting the sign of said weighted posture score vector so as to determine the contribution of the ergonomy agent (34).

16. A system according to claim 15, **characterized in that** the posture scores are based on an algebraic criterion of a RULA type posture system.

17. A system according to any of claims 15 and 16, **characterized in that** each degree of freedom of the plurality of degrees of freedom of the joint is defined by an angular movement pitch lying in the range 0.001 rad to 0.1 rad.

18. A system according to any of claims 15 and 17, **characterized in that** the system further comprises an attraction agent (22) for acting on the overall position of the dummy (10) in order to move it in overall manner towards the target (13).

19. A system according to any of claims 15 and 18, **characterized in that** the system further comprises an avoider agent (31) for acting on the plurality of degrees of freedom of the joints (12) of the dummy (10) as a function of parameters defining the environment so as to avoid collisions between the dummy (10) and said environment.

20. A system according to any of claims 15 to 19, **characterized in that** the system further comprises at least one operator agent (23,33) for acting on the overall position and/or on the plurality of degrees of freedom of the joints of the dummy (10) in order to enable an operator to act in real time on the movement of the dummy (10).

21. A system according to any of claims 15 to 20, **characterized in that** the attraction agents (22,32), the avoider agents (21,31), the ergonomy agent (34), and the operator agents (23,33) are designed to interact in hierarchical manner through shared digital data (15) defining the dummy (10) and its environment.

22. A computer program, comprising instructions which, when the program is executed by a computer, make it implement the method according to any of claims 1 to 14.
